# DEMANDE DE BREVET EUROPEEN

(11) **EP 1 669 899 A1**
(43) Date de publication de la demande: **14.06.2006**
(21) Numéro de dépôt: 05292586.4
(22) Date de dépôt: 06.12.2005
(51) Int. Cl.: G06F 17/30

(54) **Procédé de traitement de requêtes HTTP et de pages HTML émises ou reçues par un navigateur vers ou en provenance d'au moins un serveur Web et serveur associé**

(30) Priorité: 08.12.2004 FR 0413088
(71) Demandeur: FRANCE TELECOM, 75015 Paris (FR)
(72) Inventeur: Laforge, Jérôme, 14120 Mondeville (FR); Deschrevel, Jean-Pierre, 14740 Putot en Bessin (FR); Gautier, Denis, 14150 Ouistreham (FR)
(74) Mandataire: Habasque, Etienne J. Jean-François

(57) **Abrégé**

L'invention concerne un procédé de traitement de requêtes HTTP et de pages HTML émises ou reçues par un navigateur vers ou en provenance d'au moins un serveur Web tel que tous les flux d'informations entre le navigateur et chaque serveur Web transitent par un serveur d'interposition (P), comportant les étapes de :
- stockage (2) d'une liste de paramètres de configuration définissant des informations à sélectionner dans les flux d'informations entre le navigateur et chaque serveur Web ;
- acquisition (4) des informations à sélectionner par filtrage des requêtes HTTP et pages HTML transitant sur le serveur d'interposition ;
- sélection (4) de formulaires contenus dans les flux d'informations et contenant au moins un champ de saisie correspondant à au moins un paramètre de configuration, et
- modification (6) du ou de chaque champ de saisie trouvé par ajout d'une valeur par défaut correspondant à une des informations préalablement acquises.

## Description

La présente invention concerne un procédé de traitement de requêtes HTTP et de pages HTML émises ou reçues par un navigateur vers ou en provenance d'au moins un serveur Web tel que tous les flux d'informations entre le navigateur et chaque serveur Web transitent par un serveur d'interposition.

Il est connu de l'homme du métier l'utilisation de formulaire (balise HTML <form>) pour permettre à un utilisateur de saisir des informations qui seront transférées sur le serveur (requête http GET et POST) pour un traitement particulier.

En présence de ces formulaires, certains navigateurs reconnaissent qu'un formulaire identique a déjà été rempli précédemment par l'utilisateur et proposent alors à l'utilisateur un historique des anciennes saisies sous forme d'un menu (par exemple, Internet Explorer de la société Microsoft Inc.). Mais ceci est effectué de manière locale et se limite à une utilisation multiple d'un même formulaire.

Par ailleurs, il est connu d'utiliser, sur un ordinateur personnel, une zone temporaire de stockage, souvent appelée "presse-papier", pour transférer des données entre deux applications selon la technique dite du "copier-coller".

Toutes ces techniques ne sont cependant pas utilisables pour récupérer des données d'un premier serveur Web pour compléter un formulaire provenant d'un deuxième serveur Web, d'une autre application HTML, voire tout simplement, d'une autre page HTML.

Le but de l'invention est de remédier à cet inconvénient en permettant de remplir un formulaire HTML à partir d'informations provenant d'autres requêtes HTTP ou d'autres pages HTML.

L'objet de l'invention est donc un procédé de traitement de requêtes HTTP et de pages HTML émises ou reçues par un navigateur vers ou en provenance d'au moins un serveur Web tel que tous les flux d'informations entre le navigateur et chaque serveur Web transitent par un serveur d'interposition (P), caractérisé en ce qu'il comporte les étapes de :
- stockage d'une liste de paramètres de configuration définissant des informations à sélectionner dans les flux d'informations entre le navigateur et chaque serveur Web ;
- acquisition des informations à sélectionner par filtrage des requêtes HTTP et pages HTML transitant sur le serveur d'interposition ;
- sélection de formulaires contenus dans les flux d'informations et contenant au moins un champ de saisie correspondant à au moins un paramètre de configuration, et
- modification du ou de chaque champ de saisie trouvé par ajout d'une valeur par défaut correspondant à une des informations préalablement acquises.

Suivant des modes particuliers de réalisation, le procédé comporte une ou plusieurs des caractéristiques suivantes :
- les paramètres de configuration comportent, pour chacun, une clé d'identification, l'adresse de la page ou de la requête correspondante et des paramètres de sélection d'informations à l'intérieur de cette page ou requête ;
- les paramètres de sélection d'informations comportent des expressions régulières ; et
- le champ de saisie modifié par ajout d'une valeur par défaut comporte en outre un attribut de modification de son apparence.

Un autre objet de l'invention est un serveur d'interposition de requêtes HTTP et de pages HTML émises ou reçues par au moins un navigateur vers ou en provenance d'une pluralité de serveurs Web tel que tous les flux d'informations entre le navigateur et les serveurs Web transitent par le serveur d'interposition, comportant des premiers moyens de stockage d'une liste de paramètres de configuration définissant des informations à sélectionner dans les flux d'informations, connectés à des moyens d'analyse de requêtes et pages des flux d'informations aptes à sélectionner et stocker des informations de ces requêtes et pages en fonction des paramètres de configuration dans des seconds moyens de stockage, lesdits moyens d'analyse et lesdits seconds moyens de stockage étant connectés à des moyens de modification d'au moins un champ de saisie d'un formulaire HTML transitant sur ce serveur par ajout d'une valeur par défaut correspondant à une des informations préalablement sélectionnées et stockées.

Suivant des modes particuliers de réalisation, le serveur comporte :
- les paramètres de configuration stockés dans les premiers moyens de stockage comportent, pour chacun, une clé d'identification, l'adresse de la page ou de la requête correspondante et des paramètres de sélection d'informations à l'intérieur de cette page ou requête ;
- les paramètres de sélection d'informations comportent des expressions régulières ; et
- il comporte en outre des moyens de modification de l'apparence du champ de saisie modifié par ajout d'une valeur par défaut.

Un autre objet de l'invention concerne un support de mémorisation comportant des instructions de programme adaptées à la mise en oeuvre du procédé de traitement de requêtes HTTP et de pages HTML lorsque ledit programme est exécuté dans le serveur d'interposition.

L'invention sera mieux comprise à la lecture de la description qui va suivre, donnée uniquement à titre d'exemple, et faite en référence aux dessins en annexe dans lesquels :
- la figure 1 est un schéma synoptique d'un système selon un mode de réalisation préféré de l'invention ;
- la figure 2 est un schéma des flux d'informations dans un mode de réalisation préférée de l'invention.

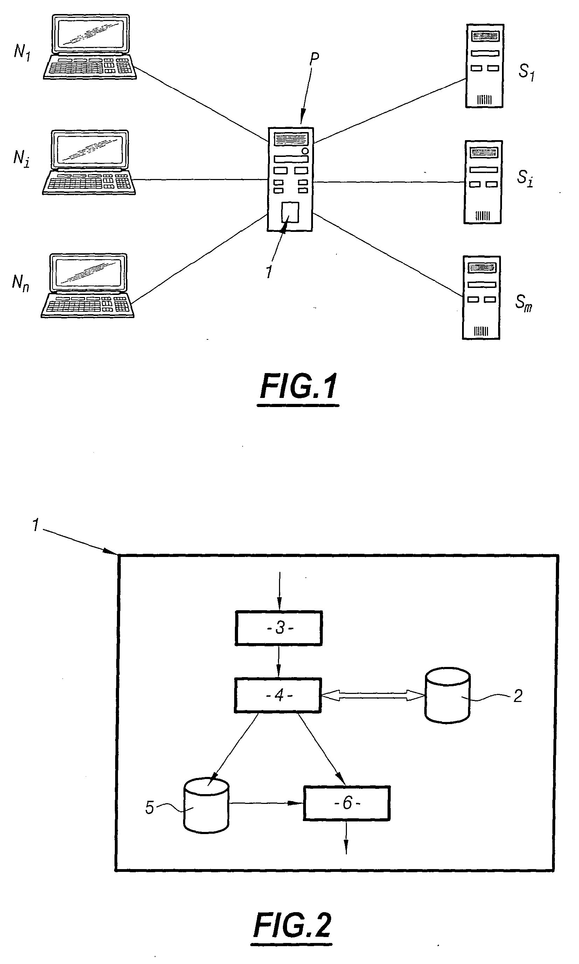

En référence à la figure 1, des stations de travail disposant d'un navigateur Internet N₁,., Nᵢ,...Nₙ sont connectées par le réseau Internet à travers un serveur d'interposition P à des serveurs Web S₁,..., Sⱼ,..., Sₘ appartenant ou non à des domaines différents.

La structure et le fonctionnement général d'un tel serveur d'interposition sont décrits dans la littérature sous le nom de serveur mandataire ("proxy server" en anglais). Le serveur d'interposition P a la possibilité de maintenir une session propre à celui-ci. Il peut, par exemple, être un serveur ICAP avec témoin (« cookie » en anglais), ou un serveur d'interposition avec mémoire d'état tel que décrit dans WO01/11821. Pour les besoins de la description qui va suivre, il suffit de retenir que tous les flux d'informations entre les navigateurs N_{1...}, N_{i...}, N_{n...} et les serveurs Web S_{1 ...}, S_{j...}, S_{m...} transitent par le serveur d'interposition P.

Ce dernier comporte de plus un module 1 (en anglais, "plug-in") capable d'analyser et de modifier tous les flux de pages HTML transitant par le serveur d'interposition P.

Par HTML (HyperText Markup Language), nous entendons tout standard permettant de décrire l'organisation d'une page d'hypertexte, comme, par exemple, le DHTML (Dynamic HyperText Markup Language) ou le XML (eXtensible Markup Language).

Le module 1 comporte, figure 2, des moyens 2 de stockage de paramètres de configuration, des moyens 3 d'acquisition d'une requête HTTP ou d'une page HTML connectés à des moyens 4 d'analyse de la page en fonction des paramètres de configuration stockés dans les moyens 2 de stockage. Les moyens 4 d'analyse sont connectés à des seconds moyens 5 de stockage permettant d'enregistrer la valeur des paramètres trouvés pendant l'analyse et à des moyens 6 de modification de la page HTML, eux-mêmes connectés à des moyens d'envoi du serveur d'interposition pour permettre l'envoi de cette page HTML à son destinataire.

Le fonctionnement du module 1 va maintenant être décrit.

Avant toute exécution, les paramètres de configuration sont stockés manuellement dans le serveur d'interposition P sous la forme générique d'un nom dit « clé d'identification », et de critères qui permettront de l'initialiser comme il va être expliqué ci-dessous. La clé d'identification est un identifiant permettant de faire le lien entre une étape d'initialisation et une étape d'utilisation.

L'étape d'initialisation s'effectue selon deux modes de fonctionnement.

Dans un premier mode de fonctionnement, nous supposons que le flux intercepté correspond en fait à une requête provenant d'un navigateur. Celle-ci se caractérise alors par une adresse URL (« Uniform Ressource Locator ») accompagnée ou non d'une série de paramètres. Ces derniers sont transmis, dans une requête http, par une méthode GET ou POST et selon la syntaxe, pour chaque paramètre,
Nom_du_paramètre = valeur_du _paramètre

Pour chaque paramètre dont on souhaite stocker la valeur, le module 1 possède comme paramètres de configuration un triplet (clé d'identification, URL, Nom_du_paramètre). Les moyens 4 d'analyse recherchent alors si, pour un URL donné, il existe des triplets correspondant aux paramètres transférés dans la requête (même nom de paramètre), et stockent alors dans les moyens de stockage 5 la clé d'identification reliée à la valeur du paramètre.

Dans un second mode de fonctionnement, le flux intercepté correspond à une page HTML transmise par un serveur Web, par exemple en réponse à la requête du navigateur précédente.

Pour ce type de page, les paramètres de configuration du module 1 comportent l'URL de la page, une expression régulière contenant un ou plusieurs groupes, un ou plusieurs numéros de groupe et une ou plusieurs clés d'identification.

La technologie des "expressions régulières" étant bien connue de l'homme du métier, le détail de son fonctionnement et de son implémentation peut être trouvé aisément dans la littérature comme, par exemple, "Maîtrise des expressions régulières", Jeffrey E.F. Friedl, O'Reilly, 2^{ème} éd., juin 2003. Il suffit de rappeler ici qu'une expression régulière est une méthode de reconnaissance d'une chaîne de caractères ayant des caractéristiques données.

Les moyens 4 d'analyse utilisent donc les expressions régulières pour détecter, dans la page ayant une URL donnée, des champs de données qui seront alors stockés dans les moyens 5 avec la ou les clés d'identification correspondantes.

Les deux modes de fonctionnement précédents permettent donc de peupler les moyens 5 de stockage d'un ensemble de clés d'identification associées à des données. Cela correspond ainsi à un mode de recueil d'informations.

Ces deux modes de fonctionnement ne modifiant pas la requête /page concernée, celle-ci peut être envoyée à son destinataire en parallèle du traitement décrit ci-dessus.

Les données ainsi recueillies pour renseigner des formulaires HTML, transitant sur le serveur d'interposition P, servent alors dans l'étape d'utilisation.

Un fichier HTML contenant un formulaire comporte, comme il est bien connu de l'homme du métier, un ensemble d'informations enserré entre deux balises HTML <form> et </form>. Des attributs de cette balise <form> permettent d'indiquer, entre autres, l'URL de la page HTML à appeler en sortie de formulaire ainsi que la méthode HTTP GET ou POST à utiliser pour passer les paramètres.

A l'intérieur de ces balises <form> </form>, outre du texte et des balises de mise en forme, se trouve au moins une balise <input> définissant une zone de saisie d'informations. Un des attributs, dénommé "type", de cette balise définit le type de champ de saisie (zone de texte, menu, bouton radio,...). Un attribut "name" définit le nom de la balise et un autre attribut, dénommé "value", définit la valeur par défaut de la balise.

Il est à noter que, avec certains navigateurs, les balises <form> et </form> sont optionnelles.

Les paramètres de configuration du module 1 contiennent alors une clé d'identification pour une page HTML donnée, définie par son URL et un champ de formulaire donné, défini par son nom.

Ainsi, quand le serveur d'interposition P intercepte la page HTML contenant le formulaire, les moyens 4 d'analyse recherchent le champ de saisie correspondant, puis la clé d'identification associée. Les moyens 4 d'analyse recherchent alors dans les moyens 5 de stockage la valeur associée à cette clé d'identification lors des premiers et seconds modes de fonctionnement.

Cette valeur associée est alors transmise aux moyens 6 de modification de la page HTML. Ces moyens complètent alors l'attribut "value" de la balise <input> avec cette valeur.

Ils modifient de plus l'apparence de la zone, par exemple, en modifiant la classe correspondante dans la feuille de style CSS (Cascaded Style Sheet - feuille de style en cascade).

Cette page ainsi modifiée est alors transférée aux autres moyens du serveur P d'interposition pour envoi à l'utilisateur.

Ainsi, une page comportant

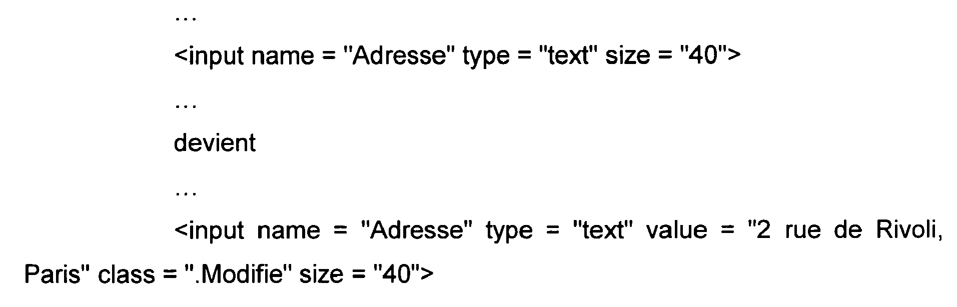

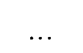

De même que le module 1 est capable de modifier le contenu d'une balise <input>, il peut également modifier d'autres types de champs de formulaire tels que, par exemple, la balise <select>, correspondant à une liste d'options, dans laquelle il sélectionne la bonne option <option>.

Il est remarquable de noter que le module 1 est capable d'effectuer quelques traitements simples sur les données enregistrées dans les moyens 5 de stockage. Il peut par exemple découper les données selon une expression régulière, fusionner des données ou les transformer (par exemple "YES" en "OUI", "NO" en "NON",...)

Ainsi, de façon remarquable, il est possible de récupérer des données provenant d'une page Web ou d'une requête HTTP pour compléter un formulaire HTML appartenant à une autre page Web.

## Revendications

1. Procédé de traitement de requêtes HTTP et de pages HTML émises ou reçues par un navigateur vers ou en provenance d'au moins un serveur Web tel que tous les flux d'informations entre le navigateur et chaque serveur Web transitent par un serveur d'interposition (P), **caractérisé en ce qu'**il comporte les étapes de :
- stockage (2) d'une liste de paramètres de configuration définissant des informations à sélectionner dans les flux d'informations entre le navigateur et chaque serveur Web ;
- acquisition (4) des informations à sélectionner par filtrage des requêtes HTTP et pages HTML transitant sur le serveur d'interposition ;
- sélection (4) de formulaires contenus dans les flux d'informations et contenant au moins un champ de saisie correspondant à au moins un paramètre de configuration, et
- modification (6) du ou de chaque champ de saisie trouvé par ajout d'une valeur par défaut correspondant à une des informations préalablement acquises.

2. Procédé de traitement de requêtes HTTP et de pages HTML selon la revendication 1, **caractérisé en ce que** les paramètres de configuration comportent, pour chacun, une clé d'identification, l'adresse de la page ou de la requête correspondante et des paramètres de sélection d'informations à l'intérieur de cette page ou requête.

3. Procédé de traitement de requêtes HTTP et de pages HTML selon la revendication 2, **caractérisé en ce que** les paramètres de sélection d'informations comportent des expressions régulières.

4. Procédé de traitement de requêtes HTTP et de pages HTML selon l'une quelconque des revendications précédentes, **caractérisé en ce que** le champ de saisie modifié par ajout d'une valeur par défaut comporte en outre un attribut de modification de son apparence.

5. Serveur d'interposition de requêtes HTTP et de pages HTML émises ou reçues par au moins un navigateur vers ou en provenance d'une pluralité de serveurs Web tel que tous les flux d'informations entre le navigateur et les serveurs Web transitent par le serveur d'interposition, **caractérisé en ce qu'**il comporte des premiers moyens de stockage (2) d'une liste de paramètres de configuration définissant des informations à sélectionner dans les flux d'informations, connectés à des moyens d'analyse (4) de requêtes HTTP et pages des flux d'informations aptes à sélectionner et stocker des informations de ces requêtes et pages en fonction des paramètres de configuration dans des seconds moyens de stockage (5), lesdits moyens d'analyse (4) et lesdits seconds moyens de stockage (5) étant connectés à des moyens de modification (6) d'au moins un champ de saisie d'un formulaire HTML transitant sur ce serveur par ajout d'une valeur par défaut correspondant à une des informations préalablement sélectionnées et stockées.

6. Serveur d'interposition de requêtes HTTP et de pages HTML selon la revendication 5, **caractérisé en ce que** les paramètres de configuration stockés dans lesdits premiers moyens de stockage (2) comportent, pour chacun, une clé d'identification, l'adresse de la page ou de la requête correspondante et des paramètres de sélection d'informations à l'intérieur de cette page ou requête.

7. Serveur d'interposition de requêtes HTTP et de pages HTML selon la revendication 6, **caractérisé en ce que** les paramètres de sélection d'informations comportent des expressions régulières.

8. Serveur d'interposition de requêtes HTTP et de pages HTML selon la revendication 6, **caractérisé en ce qu'**il comporte en outre des moyens de modification de l'apparence du champ de saisie modifié par ajout d'une valeur par défaut.

9. Support de mémorisation comportant des instructions de programme adaptées à la mise en oeuvre du procédé de traitement de requêtes HTTP et de pages HTML selon les revendications 1 à 4 lorsque ledit programme est exécuté dans le serveur d'interposition.
